# EUROPEAN PATENT APPLICATION

(11) **EP 3 366 527 A1**
(43) Date of publication of application: **29.08.2018**
(21) Application number: 16857410.1
(22) Date of filing: 17.10.2016
(51) Int. Cl.: B60R 22/28, B60R 22/46

(54) **WEBBING WINDING DEVICE**

(30) Priority: 22.10.2015 JP 2015208220
(71) Applicant: Kabushiki Kaisha Tokai Rika Denki Seisakusho, Ohguchi-cho Niwa-gun Aichi 480-0195 (JP)
(72) Inventor: TAKAMATSU, Hitoshi, Niwa-gun Aichi 480-0195 (JP); SUMIYASHIKI, Akira, Niwa-gun Aichi 480-0195 (JP); NAKANE, Keita, Niwa-gun Aichi 480-0195 (JP); MAEKAWA, Ryo, Niwa-gun Aichi 480-0195 (JP)
(74) Representative: TBK
(86) International application number: PCT/JP2016/080741
(87) International publication number: WO 2017/069095

(57) **Abstract**

In a webbing take-up device, in a vehicle collision, pull-out of a webbing from a spool by an occupant is limited by a torsion shaft of a first force limiter mechanism, is limited by a wire of a second force limiter mechanism in correspondence with a build of an occupant, and is limited by a wire of a third force limiter mechanism in correspondence with a deceleration rate of the vehicle. This enables a load at which to limit the webbing from being pulled out from the spool in a vehicle collision to be a load suited to the build of the occupant and the deceleration rate of the vehicle.

## Description

### Technical Field

The present invention relates to a webbing take-up device that limits pull-out direction rotation of a spool in a vehicle collision.

### Background Art

Japanese National-Phase Publication No. 2003-502204 discloses a belt winder in which a torsion bar is coupled to a belt shaft. In a vehicle collision, a first section of the torsion bar limit pull-out direction rotation of the belt shaft, limiting a belt strap from being pulled out from the belt shaft. In the vehicle collision, if the rotational speed of the belt shaft in the pull-out direction exceeds a threshold, a second section of the torsion bar limits pull-out direction rotation of the belt shaft, limiting the belt strap from being pulled out from the belt shaft.

In such a belt winder, in a vehicle collision, it is preferable to be able to appropriately set a load at which to limit the belt strap from being pulled out from the belt shaft according to the circumstances of the vehicle collision.

### SUMMARY OF INVENTION

### Technical Problem

In consideration of the above circumstances, an object of the present invention is to obtain a webbing take-up device capable of appropriately setting a load at which to limit a webbing from being pulled out from a spool in a vehicle collision according to the circumstances of the vehicle collision.

### Solution to Problem

A webbing take-up device of a first aspect of the present invention includes a spool that takes up a webbing worn by an occupant of a vehicle, and that is rotated in a pull-out direction by the webbing being pulled out; a first limiter mechanism that is provided at the spool, and that limits pull-out direction rotation of the spool in a vehicle collision; a second limiter mechanism that limits pull-out direction rotation of the spool according to a build of an occupant in a vehicle collision; and a third limiter mechanism that limits pull-out direction rotation of the spool according to vehicle collision circumstances in a vehicle collision.

A webbing take-up device of a second aspect of the present invention is the webbing take-up device of the first aspect of the present invention, further comprises an actuation mechanism that is actuated by an inertia member moving due to inertial force in a vehicle collision such that the third limiter mechanism limits pull-out direction rotation of the spool.

A webbing take-up device of a third aspect of the present invention is the webbing take-up device of the first aspect or the second aspect of the present invention, wherein the third limiter mechanism limits pull-out direction rotation of the spool according to at least one of acceleration in a vehicle collision, rotational speed of the spool in the pull-out direction in a vehicle collision, or rotational acceleration of the spool in the pull-out direction in a vehicle collision.

### Advantageous Effects of Invention

In the webbing take-up device of the first aspect of the present invention, the webbing worn by the occupant of the vehicle is taken up on the spool, and the spool is rotated in the pull-out direction by pulling the webbing out from the spool.

Further, the first limiter mechanism is provided at the spool, and in the vehicle collision, the first limiter mechanism limits pull-out direction rotation of the spool, limiting pull-out of the webbing from the spool.

In the vehicle collision, the second limiter mechanism limits pull-out direction rotation of the spool according to the build of the occupant, limiting pull-out of the webbing from the spool. Further, in the vehicle collision, the third limiter mechanism limits pull-out direction rotation of the spool according to vehicle collision circumstances, limiting pull-out of the webbing from the spool.

This enables appropriate setting of a load at which to limit the webbing from being pulled out from the spool in the vehicle collision.

In the webbing take-up device of the second aspect of the present invention, by actuating the actuation mechanism, the third limiter mechanism limits pull-out direction rotation of the spool.

The actuation mechanism is actuated by the inertia member being moved by the inertial force in the vehicle collision. This enables acceleration in the vehicle collision to be detected with a simple configuration.

In the webbing take-up device of the third aspect of the present invention, the third limiter mechanism limits pull-out direction rotation of the spool according to at least one of acceleration in the vehicle collision, rotational speed of the spool in the pull-out direction in the vehicle collision, or rotational acceleration of the spool in the pull-out direction in the vehicle collision. This enables appropriate setting of a load at which the third limiter mechanism limits the webbing from being pulled out from the spool.

### BRIEF DESCRIPTION OF DRAWINGS

Fig. 1 is a cross-section illustrating a webbing take-up device according to a first exemplary embodiment of the present invention, as viewed from the front.
Fig. 2 is an exploded perspective view illustrating a second force limiter mechanism of a webbing take-up device according to the first exemplary embodiment of the present invention, as viewed from the front side.
Fig. 3A is a face-on view illustrating relevant portions of a second force limiter mechanism of a webbing take-up device according to the first exemplary embodiment of the present invention, as viewed from one side, in the case of an occupant of small build.
Fig. 3B is a face-on view illustrating relevant portions of a second force limiter mechanism of a webbing take-up device according to the first exemplary embodiment of the present invention, as viewed from one side, in the case of an occupant of large build.
Fig. 4 is a face-on view illustrating a detection mechanism of a webbing take-up device according to the first exemplary embodiment of the present invention, as viewed from the front.
Fig. 5 is a cross-section illustrating a modified example of a detection mechanism of a webbing take-up device according to the first exemplary embodiment of the present invention, as viewed from one side.
Fig. 6 is a plan view illustrating a modified example of a detection mechanism of a webbing take-up device according to the first exemplary embodiment of the present invention, as viewed from above.
Fig. 7 is a graph illustrating a relationship between elapsed time (time) and force limiter load (FL load) during a head-on vehicle collision for the first exemplary embodiment of the present invention.
Fig. 8 is an exploded perspective view illustrating a fourth force limiter mechanism of a webbing take-up device according to a second exemplary embodiment of the present invention, as viewed from the front side.
Fig. 9 is a graph illustrating a relationship between elapsed time (time) and force limiter load (FL load) during a head-on vehicle collision for the second exemplary embodiment of the present invention.
Fig. 10 is an exploded perspective view illustrating a fourth force limiter mechanism of a webbing take-up device according to a third exemplary embodiment of the present invention, as viewed from one side.
Fig. 11 is a graph illustrating a relationship between elapsed time (time) and force limiter load (FL load) during a head-on vehicle collision for the third exemplary embodiment of the present invention.

### DESCRIPTION OF EMBODIMENTS

### First Exemplary Embodiment

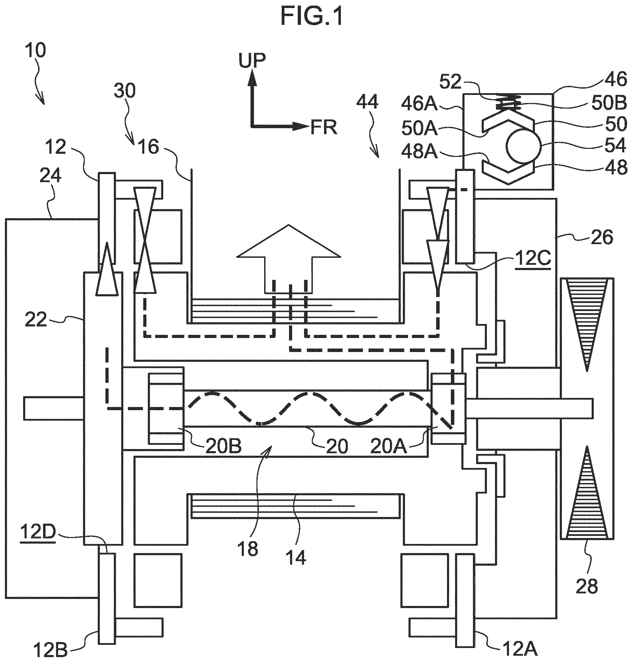

Fig. 1 is a cross-section illustrating a webbing take-up device 10 according to a first exemplary embodiment of the present invention, as viewed from the front. Note that in the drawings, the arrow FR points toward the vehicle front (one vehicle front-rear direction), the arrow IN points toward the vehicle width direction inside, and the arrow UP points upward.

The webbing take-up device 10 according to the present exemplary embodiment is installed in a vehicle, with the front, one side, and upward of the webbing take-up device 10 respectively oriented toward the vehicle width direction outside, the vehicle front, and the upward.

As illustrated in Fig. 1, the webbing take-up device 10 includes a frame 12 that serves as a support member and has a plate shape with a U-shaped cross-section profile. The frame 12 includes a back plate (not illustrated in the drawings) at the rear, a leg plate 12Aon the one side, and a leg plate 12B on the other side. The frame 12 is fixed to the vehicle body at the back plate to install the webbing take-up device 10 in the vehicle.

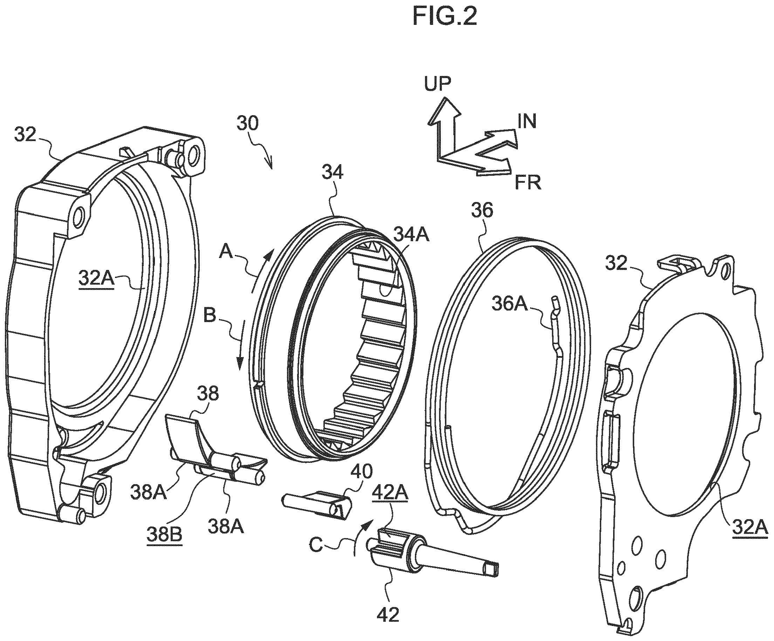

A substantially circular cylinder shaped spool 14 is rotatably supported between the leg plate 12A and the leg plate 12B of the frame 12. An end portion on the leg plate 12A side of the spool 14 passes through a circular through hole 12C in the leg plate 12A. An elongated belt shaped webbing 16 is wound onto the spool 14 from a length direction base end side. The webbing 16 is taken up onto the spool 14 by rotating the spool 14 in a take-up direction (the arrow A direction in Fig. 2), and pulling the webbing 16 out from the spool 14 rotates the spool 14 in a pull-out direction (the arrow B direction in Fig. 2). An occupant seated in a vehicle seat pulls the webbing 16 out from the spool 14 to put on the webbing 16.

The spool 14 is provided with a first force limiter mechanism 18, serving as a first limiter mechanism.

The first force limiter mechanism 18 is provided with a substantially circular column shaped metal torsion shaft 20, serving as an energy absorption member. The torsion shaft 20 is disposed so as to be coaxial with the spool 14. One end 20A on the leg plate 12A side of the torsion shaft 20 is coupled to the spool 14 so as to be capable of rotating as a unit with the spool 14, thus enabling the torsion shaft 20 to rotate as a unit with the spool 14. The one end 20A of the torsion shaft 20 projects from the spool 14 and extends to the outside of the leg plate 12A of the frame 12.

A substantially circular plate shaped lock base 22, serving as a restriction member, is coaxially provided at the leg plate 12B side of the spool 14. The lock base 22 passes through a circular through hole 12D in the leg plate 12B. Another end 20B on the leg plate 12B side of the torsion shaft 20 is coaxially coupled to the lock base 22 so as to be capable of rotating as a unit with the lock base 22, thus enabling the lock base 22 to rotate as a unit with the spool 14 and the torsion shaft 20.

A sensor mechanism 24, serving as a first detection means, is provided at the outside of the leg plate 12B of the frame 12. The sensor mechanism 24 detects rapid vehicle deceleration and rapid pull-out of the webbing 16 from the spool 14 in a vehicle collision (emergency). When the sensor mechanism 24 detects rapid vehicle deceleration or rapid pull-out of the webbing 16 from the spool 14, the sensor mechanism 24 actuates so as to restrict (lock) rotation of the lock base 22 in the pull-out direction (and permit rotation of the lock base 22 in the take-up direction).

In a state in which pull-out direction rotation of the lock base 22 is restricted, when a pull-out direction load from the occupant greater than or equal to a torsion-withstand load of the torsion shaft 20 acts on the spool 14 through the webbing 16, the torsion shaft 20 undergoes torsional deformation so as to permit the one end 20A of the torsion shaft 20 to rotate in the pull-out direction with respect to the other end 20B, thereby permitting pull-out direction rotation of the spool 14 with respect to the lock base 22.

A pre-tensioner mechanism 26, serving as a take-up mechanism, is provided at the outside of the leg plate 12A of the frame 12. In a vehicle collision (when a vehicle collision, this being a vehicle emergency, has been detected), the pre-tensioner mechanism 26 actuates such that pressure from high-pressure gas instantaneously-generated rotates the one end 20A of the torsion shaft 20 rapidly in the take-up direction, thereby rotating the spool 14 rapidly in the take-up direction.

A biasing mechanism 28 is provided on the opposite side of the pre-tensioner mechanism 26 to the spool 14. The biasing mechanism 28 is linked to the one end 20A of the torsion shaft 20, and biases the spool 14 in the take-up direction.

A second force limiter mechanism 30, serving as a second limiter mechanism, is provided at the inside of the leg plate 12B of the frame 12.

As illustrated in Fig. 2, the second force limiter mechanism 30 includes a case 32 that has a substantially circular column shaped box shape. The spool 14 passes through a circular through hole 32A in the case 32, and the case 32 is fixed to the leg plate 12B.

A substantially circular cylinder shaped clutch ring 34, serving as a rotation member, is rotatably supported inside the case 32. The spool 14 passes through the inside of the clutch ring 34, and the clutch ring 34 is disposed so as to be coaxial with the spool 14. Ratchet teeth 34A (inner teeth) are formed around the entire inner circumference of the clutch ring 34.

A helical rod shaped metal wire 36, serving as a supplementary energy absorption member, is supported at the outer periphery of the clutch ring 34 inside the case 32. One end 36A (a pull-out direction side end) of the wire 36 is anchored to the clutch ring 34.

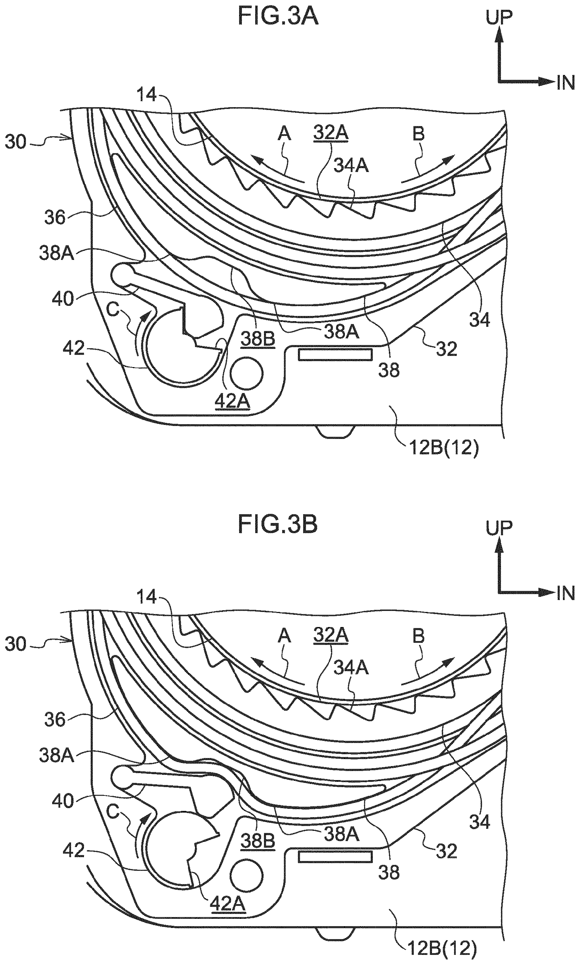

A substantially curving plate shaped guide 38, serving as a deformation member, is fixed at a lower side of the wire 36 inside the case 32. The guide 38 is disposed following a peripheral direction of the wire 36. A lower side face of the guide 38 is formed with a pair of protrusions 38A along the peripheral direction of the wire 36. Each of the protrusions 38A has a substantially triangular cross-section profile. A recess 38B with a trapezoidal cross-section profile is formed between the protrusions 38A. In the vicinity of the one end 36A, the wire 36 is disposed at the lower side face of the guide 38 (see Fig. 3A).

A substantially plate shaped press lever 40, serving as a pressing member, is supported at the lower side of the guide 38 inside the case 32. The press lever 40 is capable of swinging about its base end. A leading end portion of the press lever 40 has a fan shaped cross-section profile. The leading end portion of the press lever 40 projects toward the lower side and faces the recess 38B of the guide 38 across the wire 36 in the vicinity of the one end 36A (see Fig. 3A).

A substantially circular column shaped cam 42, serving as a second detection means, is rotatably supported at the lower side of the press lever 40 inside the case 32. A cam recess 42A is formed over a predetermined range in a peripheral direction of the cam 42. The leading end portion of the press lever 40 is inserted into the cam recess 42A. The cam 42 is connected to the spool 14 through a speed reduction mechanism (not illustrated in the drawings) serving as a transmission means, and the cam 42 is rotated in an actuation direction (the arrow C direction in Fig. 2) at greatly reduced speed through the speed reduction mechanism when the spool 14 is rotated in the pull-out direction.

In the case of an occupant of small build, a small amount of the webbing 16 is pulled out from the spool 14 when the webbing 16 is pulled out to be worn by the occupant. Accordingly, the rotation amount of the spool 14 in the pull-out direction and the rotation amount of the cam 42 in the actuation direction due to the webbing 16 being pulled out are also small (an occupant of small build is detected). Accordingly, the leading end portion of the press lever 40 is disposed in the cam recess 42A of the cam 42, and the wire 36 is not pressed toward the guide 38 side (see Fig. 3A).

In the case of an occupant of large build (standard or larger), a large amount of the webbing 16 is pulled out from the spool 14 when the webbing 16 is pulled out to be worn by the occupant. Accordingly, the rotation amount of the spool 14 in the pull-out direction and the rotation amount of the cam 42 in the actuation direction due to the webbing 16 being pulled out are also large (an occupant of large build is detected). Accordingly, the leading end portion of the press lever 40 is disposed at the outer periphery of the cam 42 and presses the wire 36 toward the guide 38 side (see Fig. 3B).

A clutch pawl (not illustrated in the drawings), serving as an actuation member, is provided at a leg plate 12B side end portion of the spool 14 so as to be capable of swinging. When pull-out direction rotation of the spool 14 with respect to the lock base 22 begins to be permitted, biasing force swings the clutch pawl swings such that the clutch pawl meshes with the ratchet teeth 34A of the clutch ring 34, thereby enabling the clutch ring 34 to rotate in the pull-out direction as a unit with the spool 14 (take-up direction rotation of the spool 14 with respect to the clutch ring 34 is permitted).

As illustrated in Fig. 1, a third force limiter mechanism 44, serving as a third limiter mechanism, is provided at the inside of the leg plate 12A of the frame 12. The third force limiter mechanism 44 is provided with a case 32, a clutch ring 34, a wire 36, a guide 38, a press lever 40, a cam 42, and a clutch pawl similar to those of the second force limiter mechanism 30 (see Fig. 2).

The case 32 of the third force limiter mechanism 44 is fixed to the leg plate 12A, and the clutch pawl is provided to the leg plate 12A side end portion of the spool 14 so as to be capable of swinging.

The third force limiter mechanism 44 is provided with a detection mechanism 46, serving as an actuation mechanism (third detection means). The detection mechanism 46 is fixed to the leg plate 12A.

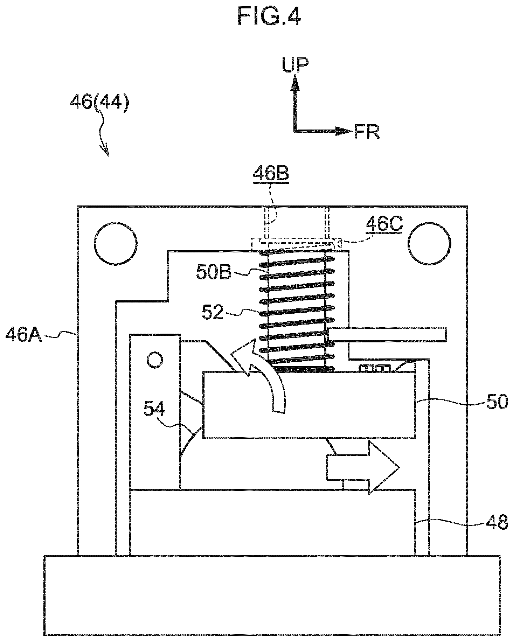

As illustrated in Fig. 4, the detection mechanism 46 is provided with a substantially rectangular tube shaped housing body 46A. The interior of the housing body 46A is open in the front-rear direction. A circular insertion hole 46B is formed penetrating an upper wall of the housing body 46A, and the axial direction of the insertion hole 46B is disposed parallel to the up-down direction. A lower face of the upper wall of the housing body 46A is formed with a circular limiting recess 46C (depression), serving as a limiting portion. The limiting recess 46C is disposed so as to be coaxial with the insertion hole 46B, and is in communication with the insertion hole 46B.

A substantially plate shaped housing 48, serving as a placement member, is integrally provided to a lower portion of the housing body 46A at the interior of the housing body 46A. A placement face 48A is formed at an upper face of the housing 48. The placement face 48A is configured by a rectangular recess as viewed face-on, and the placement face 48A is inclined in directions toward the upper side on progression from a vehicle front-rear direction center toward both vehicle front-rear direction sides.

Inside the housing body 46A, a substantially plate shaped movable lever 50, serving as a moving member, is provided at an upper side of the housing 48 so as to be capable of moving. A lower face of the lever 50 is formed with a press face 50A. The press face 50A has a recessed profile as viewed face-on, and the press face 50A is inclined in directions toward the lower side on progression from a center toward outer peripheral sides. The center of the press face 50A faces the vehicle front-rear direction center of the placement face 48A of the housing 48 in the up-down direction. A circular column shaped boss 50B, serving as an insertion portion, is integrally provided to an upper side of the lever 50. An upper portion of the boss 50B is coaxially inserted through the insertion hole 46B and the limiting recess 46C of the housing body 46A, and is fitted into the insertion hole 46B.

A compression coil spring 52, serving as a biasing means, is provided at the upper side of the lever 50. The boss 50B of the lever 50 is inserted through the inside the compression coil spring 52 so as to be coaxial with the compression coil spring 52. An upper end portion of the compression coil spring 52 is inserted into the limiting recess 46C of the housing body 46A so as to be coaxial with the limiting recess 46C, and the compression coil spring 52 spans between a bottom face (upper face) of the limiting recess 46C and an upper face of the lever 50, such that the compression coil spring 52 biases the lever 50 toward the lower side.

A spherical ball 54, serving as an inertia member, is provided between the placement face 48A of the housing 48 and the press face 50A of the lever 50. The ball 54 is biased toward the lower side by the compression coil spring 52, and movement of the ball 54 in the horizontal direction is limited. When the deceleration rate in a vehicle collision is greater than or equal to a predetermined value (for example 25G), the ball 54 moves a predetermined distance in the horizontal direction against the biasing force of the compression coil spring 52 due to inertial force. Accordingly, the lever 50 moves a predetermined amount toward the upper side, thereby actuating the detection mechanism 46 (a deceleration rate in a vehicle collision greater than or equal to a predetermined value is detected).

In the third force limiter mechanism 44, the detection mechanism 46 (lever 50) is connected to the cam 42. When the detection mechanism 46 is not actuated, the cam 42 is not rotated. Accordingly, the leading end portion of the press lever 40 is disposed in the cam recess 42A of the cam 42 and the wire 36 is not pressed toward the guide 38 side (similarly to in the second force limiter mechanism 30 illustrated in Fig. 3A). However, when the detection mechanism 46 is actuated, the cam 42 rotates in the actuation direction. Accordingly, the leading end portion of the press lever 40 is disposed at the outer periphery of the cam 42 and presses the wire 36 toward the guide 38 side (similarly to in the second force limiter mechanism 30 illustrated in Fig. 3B).

Next, explanation follows regarding operation of the present exemplary embodiment.

In the webbing take-up device 10 configured as described above, the webbing 16 is pulled out from the spool 14 when an occupant puts on the webbing 16. The biasing force of the biasing mechanism 28 rotates the spool 14 in the take-up direction, taking the webbing 16 up on the spool 14, thereby removing slack from the webbing 16 worn by the occupant.

In a vehicle collision, inertial force acts on the occupant as a result of the vehicle decelerating. The inertial force acting on the occupant, and the acceleration of the webbing 16 being pulled out from the spool 14 by the occupant (pull-out load), become greater the larger a build of the occupant and the greater the deceleration rate of the vehicle (intensity of the collision).

In a vehicle collision, the sensor mechanism 24 of the first force limiter mechanism 18 detects the rapid deceleration of the vehicle or the rapid pull-out of the webbing 16 from the spool 14, and actuates. Accordingly, pull-out direction rotation of the lock base 22 is restricted, limiting pull-out direction rotation of the spool 14 with the torsion shaft 20. Pull-out of the webbing 16 from the spool 14 is thus limited, such that the occupant is restrained by the webbing 16.

In a vehicle collision, the pre-tensioner mechanism 26 actuates so as to rotate the torsion shaft 20 rapidly in the take-up direction and rotate the spool 14 rapidly in the take-up direction. The webbing 16 is thus rapidly taken up onto the spool 14, increasing the restraining force of the webbing 16 on the occupant.

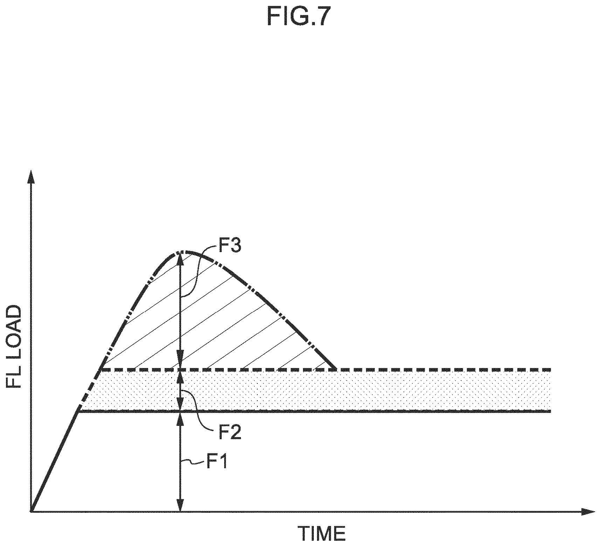

In a state in which pull-out direction rotation of the lock base 22 is restricted as described above, if the pull-out load of the webbing 16 from the spool 14 (pull-out direction rotation load on the spool 14) from the occupant is greater than or equal to a torsion-withstand load of the torsion shaft 20, the torsion shaft 20 undergoes torsional deformation, permitting pull-out direction rotation of the spool 14 with respect to the lock base 22. Pull-out of the webbing 16 from the spool 14 by the occupant is limited by the load for causing the torsion shaft 20 to undergo torsional deformation (F1 in Fig. 7, referred to hereafter as the "first force limiter load").

When pull-out direction rotation of the spool 14 with respect to the lock base 22 begins to be permitted, in the second force limiter mechanism 30 and the third force limiter mechanism 44, the respective clutch pawls are swung by biasing force so as to mesh with the ratchet teeth 34A of the respective clutch rings 34. The clutch rings 34 thus become capable of rotating in the pull-out direction as a unit with the spool 14. Accordingly, when the occupant pulls out the webbing 16 from the spool 14, the spool 14 is rotated in the pull-out direction, and the clutch rings 34 are rotated in the pull-out direction as a unit with the spool 14. The one end 36A of the wire 36 is thus rotated in the pull-out direction as a unit with the clutch ring 34, and the wire 36 is wrapped onto the outer peripheral face of the clutch ring 34 while passing below the guide 38 in the pull-out direction.

In the second force limiter mechanism 30, in cases in which an occupant is of small build, the pull-out direction rotation amount of the spool 14 and the actuation direction rotation amount of the cam 42 are both small when the webbing 16 is pulled out to be worn by the occupant, and therefore the leading end portion of the press lever 40 is disposed in the cam recess 42A of the cam 42 and the wire 36 is not pressed toward the guide 38 side (see Fig. 3A). Accordingly, even if the wire 36 passes the lower side of the guide 38 in the pull-out direction as described above, the wire 36 is not squeezed and deformed by the pair of protrusions 38A of the guide 38 and the leading end portion of the press lever 40.

In cases in which an occupant is of large build, the pull-out direction rotation amount of the spool 14 and the actuation direction rotation amount of the cam 42 are both large when the webbing 16 is pulled out to be worn by the occupant, and therefore the leading end portion of the press lever 40 is disposed at the outer periphery of the cam 42 and presses the wire 36 toward the guide 38 side (see Fig. 3B). Accordingly, when the wire 36 passes to the lower side of the guide 38 in the pull-out direction as described above, the wire 36 is squeezed and deformed by the pair of protrusions 38A of the guide 38 and the leading end portion of the press lever 40. Pull-out of the webbing 16 from the spool 14 by the occupant is limited by the load for squeezing and deforming the wire 36 with the guide 38 and the press lever 40 (F2 in Fig. 7, referred to hereafter as the "second force limiter load").

In the third force limiter mechanism 44, if the deceleration rate in a vehicle collision is below a predetermined value, in the detection mechanism 46, the ball 54 does not move the predetermined distance against the biasing force of the compression coil spring 52 due to inertial force and the lever 50 does not move the predetermined amount toward the upper side, and therefore the detection mechanism 46 does not actuate. The cam 42 therefore does not rotate, and the leading end portion of the press lever 40 is disposed in the cam recess 42A of the cam 42 and does not press the wire 36 toward the guide 38 side (similarly to in the second force limiter mechanism 30 illustrated in Fig. 3A). Accordingly, even when the wire 36 passes the lower side of the guide 38 in the pull-out direction as described above, the wire 36 is not squeezed and deformed by the pair of protrusions 38A of the guide 38 and the leading end portion of the press lever 40.

If the deceleration rate in a vehicle collision is greater than or equal to the predetermined value, in the detection mechanism 46, the ball 54 moves the predetermined distance in the horizontal direction against the biasing force of the compression coil spring 52 due to inertial force and the lever 50 moves the predetermined distance toward the upper side, and so the detection mechanism 46 actuates. The cam 42 accordingly rotates in the actuation direction, such that the leading end portion of the press lever 40 is disposed at the outer periphery of the cam 42 and presses the wire 36 toward the guide 38 side (similarly to in the second force limiter mechanism 30 illustrated in Fig. 3B). Accordingly, when the wire 36 passes the lower side of the wire 36 in the pull-out direction as described above, the wire 36 is squeezed and deformed by the pair of protrusions 38A of the guide 38 and the leading end portion of the press lever 40. Pull-out of the webbing 16 from the spool 14 by the occupant is limited by the load for squeezing and deforming the wire 36 with the guide 38 and the press lever 40 (F3 in Fig. 7, referred to hereafter as the "third force limiter load").

Thus, in cases in which the occupant is of small build, when the deceleration rate in a vehicle collision is below the predetermined value, the force limiter load (the load limiting pull-out of the webbing 16 from the spool 14 by the occupant, the load to permit pull-out of the webbing 16 from the spool 14 by the occupant) is set to the first force limiter load of the first force limiter mechanism 18, and kinetic energy of the occupant is absorbed by the first force limiter mechanism 18 (torsional deformation of the torsion shaft 20).

In cases in which the occupant is of large build, when the deceleration rate in a vehicle collision is below the predetermined value, the force limiter load is set to the sum of the first force limiter load of the first force limiter mechanism 18 and the second force limiter load of the second force limiter mechanism 30, and kinetic energy of the occupant is absorbed by the first force limiter mechanism 18 (torsional deformation of the torsion shaft 20) and the second force limiter mechanism 30 (squeezing deformation of the wire 36).

In cases in which the occupant is of small build, when the deceleration rate in a vehicle collision is greater than or equal to the predetermined value, the force limiter load is set to the sum of the first force limiter load of the first force limiter mechanism 18 and the third force limiter load of the third force limiter mechanism 44, and kinetic energy of the occupant is absorbed by the first force limiter mechanism 18 (torsional deformation of the torsion shaft 20) and the third force limiter mechanism 44 (squeezing deformation of the wire 36).

In cases in which the occupant is of large build, when the deceleration rate in a vehicle collision is greater than or equal to the predetermined value, the force limiter load is set to the sum of the first force limiter load of the first force limiter mechanism 18, the second force limiter load of the second force limiter mechanism 30, and the third force limiter load of the third force limiter mechanism 44 (see Fig. 7). Kinetic energy of the occupant is absorbed by the first force limiter mechanism 18 (torsional deformation of the torsion shaft 20), the second force limiter mechanism 30 (squeezing deformation of the wire 36), and the third force limiter mechanism 44 (squeezing deformation of the wire 36).

In this manner, the larger the build of the occupant, and the greater the deceleration rate in a vehicle collision, the greater the force limiter load. This enables the force limiter load to be set to a load suited to the build of the occupant and the deceleration rate in a vehicle collision, thereby enabling appropriate occupant protection.

In the third force limiter mechanism 44, the detection mechanism 46 detects the deceleration rate in a vehicle collision. This enables elimination of the need to electrically connect the third force limiter mechanism 44 to a vehicle-side detection device to detect the deceleration rate of the vehicle, enables a wire harness or the like for the electrical connection of the third force limiter mechanism 44 to such a detection device to be made unnecessary, and enables a reduction in costs.

Moreover, in the detection mechanism 46, the ball 54 moves the predetermined amount in the horizontal direction against the biasing force of the compression coil spring 52 due to inertial force and the lever 50 moves the predetermined amount toward the upper side to detect when a deceleration rate in a vehicle collision greater than or equal to the predetermined value and actuate the detection mechanism 46. This enables the configuration of the detection mechanism 46 to be simplified, and enables the deceleration rate of the vehicle required for actuation of the detection mechanism 46 to be simply adjusted.

Moreover, in the third force limiter mechanism 44, when the deceleration rate in a vehicle collision is greater than or equal to the predetermined value, the detection mechanism 46 actuates and the third force limiter mechanism 44 limits pull-out of the webbing 16 from the spool 14. Accordingly, in a vehicle collision, the third force limiter mechanism 44 is able to begin limiting pull-out of the webbing 16 from the spool 14 at a timing when the deceleration rate of the vehicle changes from being below the predetermined value to being greater than or equal to the predetermined value, and the third force limiter mechanism 44 can be stopped from limiting the webbing 16 with respect to the spool 14 at a timing when the deceleration rate of the vehicle changes from being greater than or equal to the predetermined value to being below the predetermined value. The third force limiter mechanism 44 is thus capable of limiting pull-out of the webbing 16 from the spool 14 in accordance with various vehicle collision modes (for example, a mode in which the deceleration rate of the vehicle changes from being below the predetermined value to being greater than or equal to the predetermined value in a secondary collision).

Moreover, in the detection mechanism 46, the upper end portion of the compression coil spring 52 is inserted into the limiting recess 46C of the housing body 46A. This enables radial direction rattling and slippage of the compression coil spring 52 to be suppressed by the peripheral face of the limiting recess 46C, even when radial direction inertial force acts on the compression coil spring 52 in a vehicle collision. Moreover, the upper portion of the boss 50B of the lever 50 is fitted into the insertion hole 46B of the housing body 46A, and the boss 50B that is limited from moving in the radial direction by the peripheral face of the insertion hole 46B is inserted into the compression coil spring 52. This enables radial direction flexing and buckling of the compression coil spring 52 to be suppressed by the boss 50B even when radial direction inertial force acts on the compression coil spring 52 in a vehicle collision. Accordingly, the biasing load applied to the lever 50 by the compression coil spring 52 can be stabilized, enabling operation of the detection mechanism 46 to be stabilized.

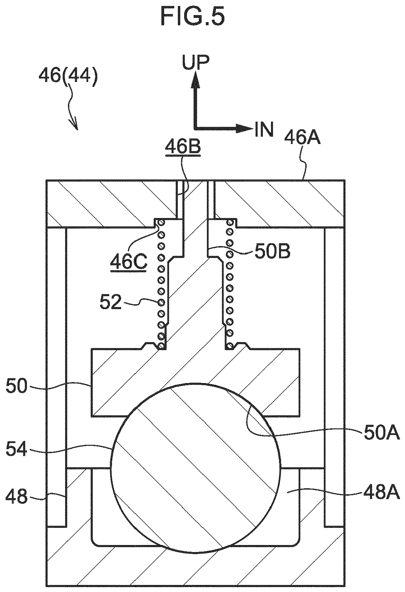

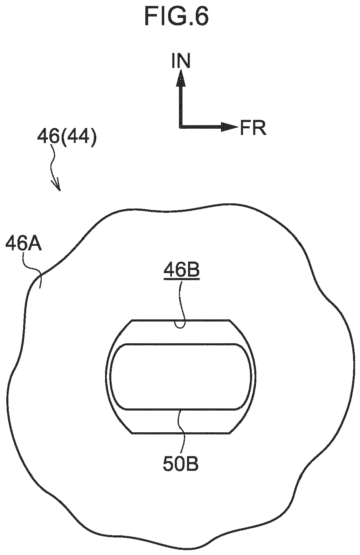

Note that in the present exemplary embodiment, the boss 50B of the lever 50 has a circular column shape. However, as illustrated in Fig. 5 and Fig. 6, the upper side portion (at least a portion) of the boss 50B of the lever 50 may be configured with a smaller vehicle width direction dimension such that the upper side portion (at least a portion) of the boss 50B of the lever 50 has an elliptical column shape. In such cases, the upper portion of the boss 50B is fitted into the insertion hole 46B of the housing body 46A in the vehicle front-rear direction, and both vehicle front-rear direction side faces of the upper side portion of the boss 50B are disposed in the vicinity of the compression coil spring 52. This enables vehicle front-rear direction flexing and buckling of the compression coil spring 52 to be suppressed by the boss 50B even when vehicle front-rear direction inertial force acts on the compression coil spring 52 in a vehicle collision. Moreover, in such cases, the insertion hole 46B of the housing body 46A may be configured with a smaller vehicle width direction dimension such that the insertion hole 46B has an elliptical shape.

### Second Exemplary Embodiment

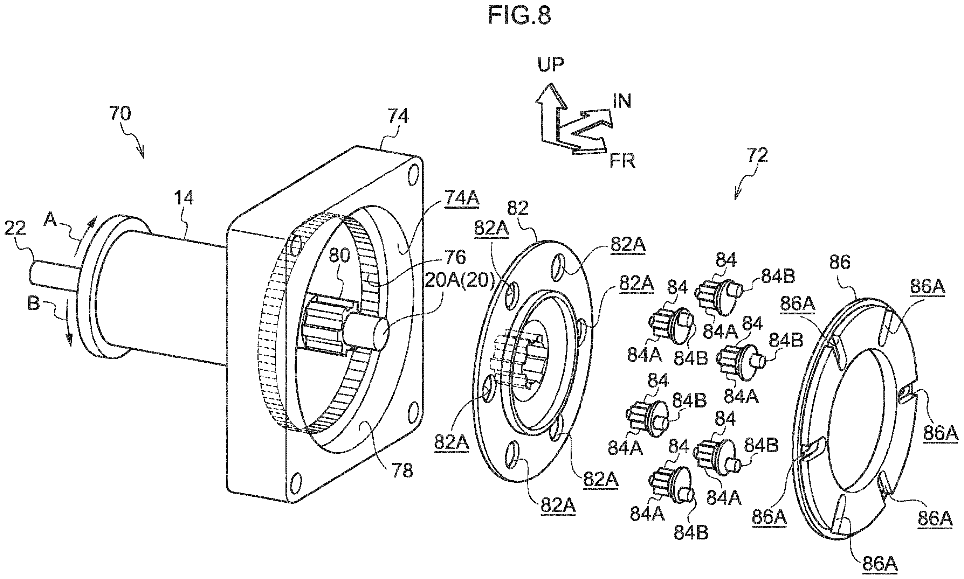

Fig. 8 is an exploded perspective view illustrating relevant portions of a webbing take-up device 70 according to a second exemplary embodiment of the present invention, as viewed from the front side.

The webbing take-up device 70 according to the present exemplary embodiment has substantially the same configuration as the first exemplary embodiment, but differs in the following points.

In the webbing take-up device 70 according to the present exemplary embodiment, in place of the third force limiter mechanism 44, a fourth force limiter mechanism 72 is provided as a third force limiter mechanism at the inside of the leg plate 12A of the frame 12.

As illustrated in Fig. 8, the fourth force limiter mechanism 72 is provided with a placement body 74 with a rectangular external profile, serving as a placement member. The placement body 74 is fixed to the leg plate 12A. The placement body 74 is provided with a substantially circular placement hole 74A, and the one end 20A of the torsion shaft 20 is coaxially disposed in the placement hole 74A. A internal-toothed gear 76 is coaxially provided at the outer periphery of a spool 14 side portion of the placement hole 74A, and a circular support hole 78 is coaxially provided at the opposite side of the placement hole 74A to the spool 14.

A substantially circular cylinder shaped clutch cylinder 80, serving as an actuation member, is coaxial with, and rotatably supported at, the one end 20A of the torsion shaft 20. The one end 20A of the torsion shaft 20 is inserted through the clutch cylinder 80. In a vehicle collision, when pull-out direction rotation of the spool 14 with respect to the lock base 22 begins to be permitted, the clutch cylinder 80 is coupled to the spool 14, and the clutch cylinder 80 is capable of rotating in the pull-out direction as a unit with the spool 14 (and permit rotation of the spool 14 in the take-up direction with respect to the clutch cylinder 80).

A substantially circular plate shaped rotation plate 82, serving as a transmission member, is coupled to the clutch cylinder 80 so as to be coaxial to the clutch cylinder 80 and capable of rotating as a unit with the clutch cylinder 80. The rotation plate 82 is disposed so as to be coaxial with the support hole 78 in the placement body 74 (placement hole 74A). A predetermined number of circular rotation holes 82A are formed penetrating the outer circumference of the rotation plate 82. The predetermined number of rotation holes 82A are disposed at uniform intervals around the circumferential direction of the rotation plate 82.

Substantially circular column shaped eccentric gears 84, serving as moving members, are inserted through the rotation holes 82A. The eccentric gears 84 are coaxially fitted into the respective rotation holes 82A, and are rotatably supported by the rotation holes 82A. A portion of each eccentric gear 84 on the spool 14 side of the rotation hole 82A is coaxially provided with an external-toothed gear 84A. Each external-toothed gear 84A meshes with the internal-toothed gear 76 of the placement body 74 (placement hole 74A). A peripheral portion of a face of each eccentric gear 84 on the opposite side to the spool 14 is integrally provided with a circular column shaped projection 84B, serving as a connection portion. The axial direction of each projection 84B is disposed parallel to the axial direction of the eccentric gear 84.

An annular plate shaped inertial body 86 is coaxial with, and rotatably supported at, the opposite side of the rotation plate 82 to the spool 14. The inertial body 86 is disposed so as to be coaxial with the support hole 78 in the placement body 74 (placement hole 74A). A predetermined number of elongated connection holes 86A, serving as connected portions, pass through the inertial body 86. The predetermined number of connection holes 86A are disposed at uniform intervals around the circumferential direction of the inertial body 86. The connection holes 86A are disposed such that their length directions in radial directions of the inertial body 86. The projections 84B of the eccentric gears 84 are inserted into the respective connection holes 86A, and the inertial body 86 is capable of rotating in the circumferential direction as a unit with the projections 84B. Moreover, the projections 84B are capable of moving in the radial direction of the inertial body 86.

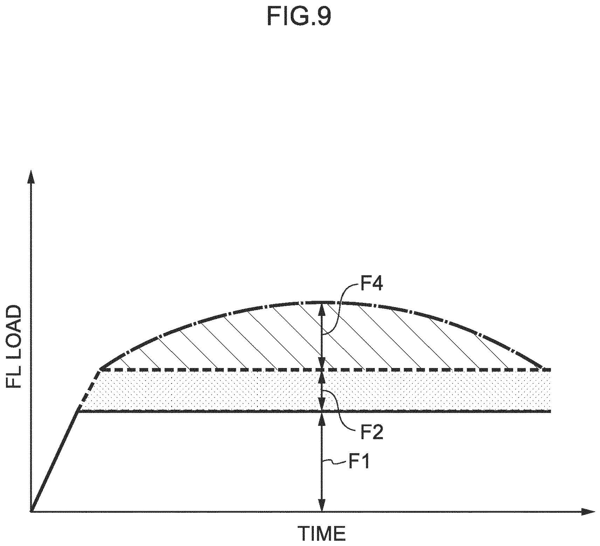

In a vehicle collision, when pull-out direction rotation of the spool 14 with respect to the lock base 22 begins to be permitted, in the fourth force limiter mechanism 72, the clutch cylinder 80 is coupled to the spool 14, and the clutch cylinder 80 is capable of rotating as a unit with the spool 14 in the pull-out direction. Accordingly, when the occupant pulls the webbing 16 out from the spool 14, the spool 14 is rotated in the pull-out direction such that the clutch cylinder 80 rotates in the pull-out direction as a unit with the spool 14, whereby the rotation plate 82 is rotated in the pull-out direction as a unit with the clutch cylinder 80 and the eccentric gears 84 revolve (rotate) in the pull-out direction while spinning. The projections 84B of the eccentric gears 84 repeatedly alternate between a state rotating the inertial body 86 in the pull-out direction and a state not rotating the inertial body 86 in the pull-out direction while moving in the radial direction of the inertial body 86. Accordingly, inertial force in the take-up direction acts on the inertial body 86. Moreover, pull-out of the webbing 16 from the spool 14 by the occupant is limited by the load due to inertial force in the take-up direction acting on the inertial body 86 (F4 in Fig. 9, referred to hereafter as the "fourth force limiter load").

Thus, in cases in which the occupant is of small build, the force limiter load (the load limiting pull-out of the webbing 16 from the spool 14 by the occupant, the load to permit pull-out of the webbing 16 from the spool 14 by the occupant) is set to the sum of the first force limiter load of the first force limiter mechanism 18 and the fourth force limiter load of the fourth force limiter mechanism 72, and kinetic energy of the occupant is absorbed by the first force limiter mechanism 18 (torsional deformation of the torsion shaft 20) and the fourth force limiter mechanism 72 (inertial force in the take-up direction acting on the inertial body 86).

In cases in which the occupant is of large build, the force limiter load is set to the sum of the first force limiter load of the first force limiter mechanism 18, the second force limiter load of the second force limiter mechanism 30, and the fourth force limiter load of the fourth force limiter mechanism 72, and kinetic energy of the occupant is absorbed by the first force limiter mechanism 18 (torsional deformation of the torsion shaft 20), the second force limiter mechanism 30 (squeezing deformation of the wire 36), and the fourth force limiter mechanism 72 (inertial force in the take-up direction acting on the inertial body 86) (see Fig. 9).

Moreover, in the fourth force limiter mechanism 72, as the rotational speed of the spool 14 (clutch cylinder 80) in the pull-out direction increases, the inertial force in the take-up direction acting on the inertial body 86 (the fourth force limiter load) increases smoothly.

Accordingly, the larger the build of the occupant, and moreover, the greater the rotational speed of the spool 14 (clutch cylinder 80) in the pull-out direction, the greater the force limiter load. This enables the force limiter load to be set to a load suited to the build of the occupant and the rotational speed of the spool 14 (clutch cylinder 80) in the pull-out direction, thereby enabling appropriate occupant protection.

### Third Exemplary Embodiment

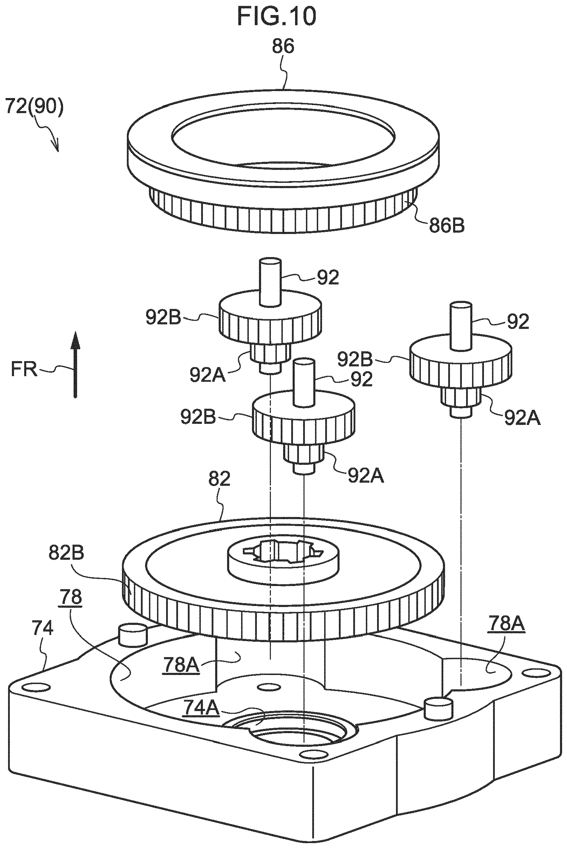

Fig. 10 is an exploded perspective view illustrating relevant portions of a webbing take-up device 90 according to a third exemplary embodiment of the present invention, as viewed from one side.

The webbing take-up device 90 according to the present exemplary embodiment has substantially the same configuration as the second exemplary embodiment described above, but differs in the following points.

As illustrated in Fig. 10, in the webbing take-up device 90 according to the present exemplary embodiment, the fourth force limiter mechanism 72 is not provided with the eccentric gears 84 of the second exemplary embodiment described above.

The placement body 74 is provided with a predetermined number (three in the present exemplary embodiment) of substantially circular housing holes 78A at the periphery of the support hole 78. Each housing hole 78A is disposed such that its axial direction is parallel to the axial direction of the support hole 78, and the housing holes 78A are in communication with the support hole 78. A rotating gear 82B (external-toothed gear) is provided so as to be coaxial with the rotation plate 82.

A two-step gear 92, serving as a speed-increasing member, is coaxially supported in each of the housing holes 78A in the placement body 74. Each two-step gear 92 is coaxially provided with a small diameter gear 92A and a large diameter gear 92B. The small diameter gear 92A is disposed on the spool 14 side of the large diameter gear 92B, and has a smaller diameter than the large diameter gear 92B. The small diameter gear 92A meshes with the rotating gear 82B of the rotation plate 82.

A spool 14 side portion of the inertial body 86 (flywheel) is coaxially provided with a speed-increasing gear 86B (external-toothed gear). The large diameter gear 92B of each two-step gear 92 meshes with the speed-increasing gear 86B. As the rotation plate 82 rotates, the inertial body 86 is rotated through the two-step gears 92, and the rotational speed (rotational angular momentum) of the inertial body 86 is increased in comparison to the rotational speed (rotational angular momentum) of the rotation plate 82.

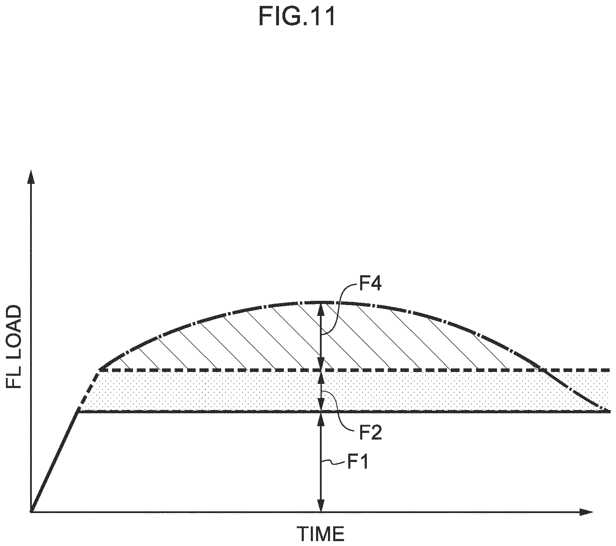

In a vehicle collision, when pull-out direction rotation of the spool 14 with respect to the lock base 22 begins to be permitted, the clutch cylinder 80 is coupled to the spool 14 in the fourth force limiter mechanism 72, and the clutch cylinder 80 is capable of rotating in the pull-out direction as a unit with the spool 14. Accordingly, when the webbing 16 is pulled out from the spool 14 by the occupant, the spool 14 is rotated in the pull-out direction such that the clutch cylinder 80 rotates in the pull-out direction as a unit with the spool 14, whereby the rotation plate 82 is rotated in the pull-out direction as a unit with the clutch cylinder 80 and the inertial body 86 is rotated at increased speed in the pull-out direction through the two-step gears 92. Deceleration of the vehicle in a collision increases the speed of the pull-out direction rotation of the spool 14 through the webbing 16 caused by the occupant, thereby increasing the speed of pull-out direction rotation of the inertial body 86, and causing inertial force in the take-up direction to act on the inertial body 86. Moreover, pull-out of the webbing 16 from the spool 14 by the occupant is limited by the load due to the inertial force in the take-up direction acting on the inertial body 86 (F4 in Fig. 11, referred to hereafter as the "fourth force limiter load").

Accordingly, in cases in which the occupant is of small build, the force limiter load (the load limiting pull-out of the webbing 16 from the spool 14 by the occupant, the load to permit pull-out of the webbing 16 from the spool 14 by the occupant) is set to the sum of the first force limiter load of the first force limiter mechanism 18 and the fourth force limiter load of the fourth force limiter mechanism 72, and kinetic energy of the occupant is absorbed by the first force limiter mechanism 18 (torsional deformation of the torsion shaft 20) and the fourth force limiter mechanism 72 (inertial force in the take-up direction acting on the inertial body 86).

In cases in which the occupant is of large build, the force limiter load is set to the sum of the first force limiter load of the first force limiter mechanism 18, the second force limiter load of the second force limiter mechanism 30, and the fourth force limiter load of the fourth force limiter mechanism 72, and kinetic energy of the occupant is absorbed by the first force limiter mechanism 18 (torsional deformation of the torsion shaft 20), the second force limiter mechanism 30 (squeezing deformation of the wire 36), and the fourth force limiter mechanism 72 (inertial force in the take-up direction acting on the inertial body 86) (see Fig. 11).

Moreover, in the fourth force limiter mechanism 72, as the build of the occupant increases, and moreover, as the deceleration rate of the vehicle in a collision increases, the rotational acceleration of the spool 14 (clutch cylinder 80) in the pull-out direction increases smoothly, and the inertial force in the take-up direction acting on the inertial body 86 (fourth force limiter load) also increases smoothly.

Accordingly, the larger the build of the occupant, and the greater the deceleration rate of the vehicle in a collision, and also the greater the rotational acceleration of the spool 14 (clutch cylinder 80) in the pull-out direction, the greater the force limiter load. This enables the force limiter load to be set to a load suited to the build of the occupant, the deceleration rate of the vehicle in a collision and the rotational acceleration of the spool 14 (clutch cylinder 80) in the pull-out direction, thereby enabling appropriate occupant protection.

Note that in the first exemplary embodiment to the third exemplary embodiment described above, the second force limiter load of the second force limiter mechanism 30 changes between two levels (a level at which the wire 36 is not squeezed and deformed, and a level at which the wire 36 is squeezed and deformed). However, the second force limiter load of the second force limiter mechanism 30 may change between three or more levels, or may change smoothly. In such cases, for example, by setting the diameter dimensions of the cam 42 so as to increase in plural steps or increase smoothly on progression from the cam recess 42A toward the opposite direction to the actuation direction, the pressing amount of the wire 36 toward the guide 38 side by the leading end portion of the press lever 40, which projects out further as the webbing 16 is pulled out (by pull-out direction rotation of the spool 14 and actuation direction rotation of the cam 42) to be worn by the occupant, increases in three or more steps or increases smoothly.

Moreover, the first exemplary embodiment described above is provided with the third force limiter mechanism 44, and the second exemplary embodiment and the third exemplary embodiment are provided with the fourth force limiter mechanism 72. However, it is sufficient that at least one of the third force limiter mechanism 44 of the first exemplary embodiment, the fourth force limiter mechanism 72 of the second exemplary embodiment, or the fourth force limiter mechanism 72 of the third exemplary embodiment is provided.

The disclosure of Japanese Patent Application No. 2015-208220, filed on October 22, 2015, is incorporated in its entirety by reference herein.

### Explanation of the Reference Numerals

- 10: WEBBING TAKE-UP DEVICE
- 14: SPOOL
- 16: WEBBING
- 18: FIRST FORCE LIMITER MECHANISM (FIRST LIMITER MECHANISM)
- 30: SECOND FORCE LIMITER MECHANISM (SECOND LIMITER MECHANISM)
- 44: THIRD FORCE LIMITER MECHANISM (THIRD LIMITER MECHANISM)
- 46: DETECTION MECHANISM (ACTUATION MECHANISM)
- 54: BALL (INERTIA MEMBER)
- 70: WEBBING TAKE-UP DEVICE
- 72: FOURTH FORCE LIMITER MECHANISM (THIRD LIMITER MECHANISM)
- 90: WEBBING TAKE-UP DEVICE

## Claims

1. A webbing take-up device comprising:
a spool that takes up a webbing worn by an occupant of a vehicle, and that is rotated in a pull-out direction by the webbing being pulled out;
a first limiter mechanism that is provided at the spool, and that limits pull-out direction rotation of the spool in a vehicle collision;
a second limiter mechanism that limits pull-out direction rotation of the spool according to a build of an occupant in a vehicle collision; and
a third limiter mechanism that limits pull-out direction rotation of the spool according to vehicle collision circumstances in a vehicle collision.

2. The webbing take-up device of claim 1, further comprising an actuation mechanism that is actuated by an inertia member moving due to inertial force in a vehicle collision such that the third limiter mechanism limits pull-out direction rotation of the spool.

3. The webbing take-up device of claim 2, wherein movement of the inertia member is released to halt actuation of the actuation mechanism.

4. The webbing take-up device of claim 2 or claim 3, further comprising a moving member that is provided at the actuation mechanism and that is moved by movement of the inertia member.

5. The webbing take-up device of claim 4, wherein the moving member moves perpendicularly to inertial force acting on the inertia member.

6. The webbing take-up device of any one of claim 2 to claim 5, further comprising a biasing means that is provided at the actuation mechanism, and that biases the inertia member toward a side opposite to a movement direction thereof.

7. The webbing take-up device of claim 6, further comprising a limiting means that is provided at the actuation mechanism, and that limits movement of the biasing means due to inertial force in a vehicle collision.

8. The webbing take-up device of any one of claim 1 to claim 6, wherein the third limiter mechanism limits pull-out direction rotation of the spool according to at least one of acceleration in a vehicle collision, rotational speed of the spool in the pull-out direction in a vehicle collision, or rotational acceleration of the spool in the pull-out direction in a vehicle collision.

9. The webbing take-up device of any one of claim 1 to claim 8, further comprising an inertial body that is provided at the third limiter mechanism, and that applies inertial force to the spool, the inertial force acting as a result of pull-out direction rotation of the spool being transmitted to the inertial body.

10. The webbing take-up device of claim 9, wherein pull-out direction rotation of the spool is increased in speed and transmitted to the inertial body.

## Amended claims

### Amended claims under Art. 19.1 PCT

1. (Amended) A webbing take-up device comprising:
a spool that takes up a webbing worn by an occupant of a vehicle, and that is rotated in a pull-out direction by the webbing being pulled out;
a first limiter mechanism that is provided at the spool, and that limits pull-out direction rotation of the spool in a vehicle collision;
a second limiter mechanism that limits pull-out direction rotation of the spool according to a build of an occupant in a vehicle collision;
a third limiter mechanism that limits pull-out direction rotation of the spool according to vehicle collision circumstances in a vehicle collision;
an actuation mechanism that is actuated by an inertia member moving due to inertial force in a vehicle collision such that the third limiter mechanism limits pull-out direction rotation of the spool, and movement of the inertia member is released to halt actuation of the actuation mechanism;
a moving member that is provided at the actuation mechanism, and that is moved by movement of the inertia member; and
a biasing means that is provided at the actuation mechanism, and that biases the inertia member toward a side opposite to a movement direction thereof.

2. (Cancelled)

3. (Cancelled)

4. (Cancelled)

5. (Amended) The webbing take-up device of claim 1, wherein the moving member moves perpendicularly to inertial force acting on the inertia member.

6. (Cancelled)

7. (Amended) The webbing take-up device of claim 1 or claim 5, further comprising a limiting means that is provided at the actuation mechanism, and that limits movement of the biasing means due to inertial force in a vehicle collision.

8. (Cancelled)

9. (Cancelled)

10. (Cancelled)

11. (New) A webbing take-up device comprising:
a spool that takes up a webbing worn by an occupant of a vehicle, and that is rotated in a pull-out direction by the webbing being pulled out;
a first limiter mechanism that is provided at the spool, and that limits pull-out direction rotation of the spool in a vehicle collision;
a second limiter mechanism that limits pull-out direction rotation of the spool according to a build of an occupant in a vehicle collision;
a third limiter mechanism that limits pull-out direction rotation of the spool according to vehicle collision circumstances in a vehicle collision; and
an inertial body that is provided at the third limiter mechanism and that applies inertial force to the spool, the inertial force acting as a result of pull-out direction rotation of the spool being transmitted to the inertial body.

12. (New) The webbing take-up device of claim 11, wherein pull-out direction rotation of the spool is increased in speed and transmitted to the inertial body.

13. (New) The webbing take-up device of claim 11 or claim 12, wherein a state in which pull-out direction rotation of the spool is transmitted to the inertial body and a state in which pull-out direction rotation of the spool is not transmitted to the inertial body are repeatedly alternated to apply the inertial force to the inertial body.

14. (New) The webbing take-up device of any one of claim 1, claim 5, claim 7, and claim 11 to claim 13, wherein
the second limiter mechanism includes:
a cam that rotates accompanying pull-out direction rotation of the spool when the webbing is worn by the occupant, and
a wire that adopts a non-pressed state or a pressed state based on a rotation amount of the cam, a force limiting pull-out direction rotation of the spool being reduced in the non-pressed state, and a force limiting pull-out direction rotation of the spool being increased in the pressed state.

Statement under Art. 19.1 PCT
claims 1-10 have been mended and claims 11-14 have been added.

The amendment of claim 1 has been based on claims 2-4 and 6. Claims 2-4, 6, and 8-10 have been deleted. Claims 5, 7 have been amended formally.

In added claim 11, claim 1 has been limited by claim 9. Added claim 12 has been claim 10. Added claim 13 has been based on the paragraph [0077] of the specification as filed. Added claim 14 has been based on the paragraphs [0054]-[0055] of the specification as filed.
